# EUROPEAN PATENT SPECIFICATION

(11) **EP 2 078 882 B1**
(45) Date of publication and mention of the grant of the patent: **28.09.2011**
(21) Application number: 09466001.6
(22) Date of filing: 09.01.2009
(51) Int. Cl.: F16H 3/72, F16H 37/12, G05B 19/416

(54) **Method and device for driving of members of machine mechanisms**
Vorrichtung und Verfahren zur Steuerung von Elementen aus Maschinenmechanismen
Dispositif et procédé de commande de pièces de mécanismes de machine

(30) Priority: 09.01.2008 CZ 20080010
(43) Date of publication of application: 15.07.2009
(73) Proprietor: VÚTS, a.s., 461 19 Liberec (CZ)
(72) Inventor: Jirasko, Petr, 46311 Liberec (CZ)
(74) Representative: Musil, Dobroslav

(56) References cited:
- EP-A- 1 659 464
- WO-A-98/50715
- DE-U1- 20 012 242
- JP-A- 7 311 609
- US-A- 4 973 295

## Description

### Technical field

The invention relates to the method for driving of members of machine mechanisms, especially at handling and production machines, whereby this drive is taken from the output member of mechanical differential and motion parameters of this drive are controlled by means of motion parameters of two input members of this mechanical differential.

The invention also relates to the device for driving of members of machine mechanisms, especially at handling and production machines, which comprises the mechanical differential connected to two input members and one output member.

### Background art

The drive of operating members of production and handling machines is given by the required technological function. First of all it is necessary to secure a suitable required motion of their operating member. In most cases the rotational motion with constant angular speed is transformed to irregular rotational or advance motion. From kinematic point of view it is transformation of motion by means of gearing with variable ratio which is generally secured by mechanisms with one degree of freedom. According to the structural possibilities these are the cam and/or jointed mechanisms which are planar or spatial. In case of cam mechanisms it is transformation of regular rotation of the cam to an operating motion of output member, which is the rocking arm or moveable lifter. Also in case of jointed mechanisms it is transformation of regular rotation of input mechanism member to irregular motion of output member with rotational or advance motion. As the need may be, these mechanisms are usually additionally equipped with constant gearing, which are e.g. the gear wheels or the belt gears. Operating members of production and manipulation machines perform periodical or non-periodical motion, while the non-periodical motion is a superposition of linear motion with a periodic motion. Motion of operating members that occurs very frequently is a periodic step motion.

There are different requirements with respect to the positional accuracy, high dynamics of motion and power efficiency placed on motion of operating members of production and handling machines. Input constant rotation of the drives of these mechanisms is secured by classic electromotors with various level of regulation, e.g. the frequency convertors. The disadvantage of these mechanisms is that they are suitable for single purpose only and that they are applicable only in the sphere of stationary automation. It is possible to change the operation motion through intervention into the drive only, this by a change of geometry of jointed mechanisms or by a change in shape of the cam in case of the cam mechanisms.

Another alternative in drive of operating member of mechanism is the electronically controlled servomotor, which on its output shaft realises the required rotation motion, which is called the stroke dependence. In the present background art this digitally controlled servomotor realising the defined motion or the defined stroke dependence is called an electronic cam. This stroke dependence after that may be transformed by means of constant gears to the operating motion rotational or advance. The advantage of electronic cams is their quick change of stroke dependence, which represents the main benefit of their application in the sphere of flexible automation and in the production systems with a small series rate. Their disadvantage is a narrow sphere of applicability in a relatively small interval of possible rotations and the performance being transferred. Substantial shortcoming reducing the sphere of applicability of the electronic cam itself is that at higher demands as to dynamics of motion the servomotor is considerably loaded by its own moment of inertia of the rotor.

For example at a requirement for a straight-lined reverse motion of the mass operating member between two dead centres, it is always necessary before the dead centre to accumulate a considerable energy of braked inertial masses, while immediately after the dead centre it is necessary to bring these inertial masses again into a fast motion in opposite direction. The present background art solves this e.g. by applying a power motor and a spring or magnetic accumulation means. Nevertheless such means complicate the solution, at the same time through them some requirements may be fulfilled only in a limited scope.

The second alternative is utilisation of independent controlled servomotor. Nevertheless this is limited by the required power necessary for starting the braked inertial masses, which the servomotor usually does not have at its disposal. The solution is also suitable for small transmitted powers only.

Document US 4 973 295 shows a method and a device for driving of members according to the preamble of claims 1 and 3.

The goal of the invention is to eliminate or at least to reduce substantially the shortcomings of the background art.

### Principle of the invention

The goal of the invention has been reached through the method for driving the members of machine mechanisms, at which the motion parameters of two input members of mechanical differential are controlled, whose principle is that at least one input member of mechanical differential is controlled by the stroke dependence of electronic cam.

In this way the power of one input member, realised e.g. through an electromotor, is used for a force transmission, while the course of output motion of mechanical differential is rectified through acting of another input member, which is represented by a controlled servomotor, thus the electronic cam. This motion may be used also on input of any machine mechanisms.

It is also advantageous if the size of stroke of electronic cam before the input member of mechanical differential is transformed by means of a constant gearing. In this way the scope of controlled speed of input member of mechanical differential can be shifted into a required area.

The goal of the invention has also been achieved through a device for realising the method according to the invention, which comprises a mechanical differential connected to two input members and to one output member, whose principle consists in that, at least one input member comprises electronic cam.

It is also advantageous, if the remaining input member of mechanical differential comprises the cam mechanism with periodic driving motion, or if the remaining input member comprises the four-joint mechanism with periodic driving motion.

By this the rotation of power electromotor may be transformed to the required motion of operating member of the driven machine mechanism.

It is also advantageous, if the remaining input member comprises the rotation motor with a constant output speed.

This enables to achieve a motion of the operating member characterised by a straight line due to a power rotation motor, on which there is superposed a fluctuation given partially or totally by the function of electronic cam.

It is also advantageous, if also the remaining input member comprises an electronic cam. In this way, even higher variability in transformation of motions of input members to a motion of operating member may be achieved.

Mechanical differential may be formed of differential device of any structural arrangement ensuring the superposition of two input motions to one output motion.

Through properties in arrangement of differential it is possible to influence the course of resultant output motion. For example in case of differential with friction wheels into the resultant motion there may be introduced elasticity into the resultant motion at starting from the dead centres caused by a required short-term slippage, etc.

### Description of the drawing

Exemplary devices according to the invention are schematically represented in the drawings, where the Fig. 1a shows a cross-section of the general planetary-gear differential with input and output members, Fig. 1b the front view to Fig. 1a, Fig. 2a front view to device with the input member comprising a double cam, Fig. 2b graphic representation of motion of output member to Fig. 2a, Fig. 3a shows a front view to the device with the input member comprising the four-joint mechanisms, Fig. 3b graphic representation of motion of output member to Fig. 3a, Fig. 4a front view to device with input member comprising a driving electromotor and Fig. 4b graphic representation of motion of output member to Fig. 4a.

### Examples of embodiment

The basic structural means of the device according to the invention is a known planetary-gear differential arranged between two parallel input members and output member.

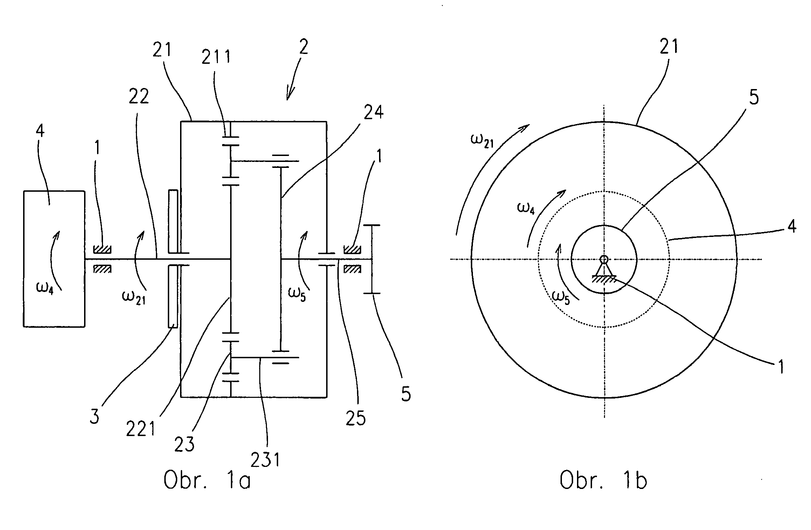

In exemplary embodiment represented in Fig. 1a, 1b the device comprises the frame **1**, in which is arranged the planetary-gear differential **2**, with whose body **21** the ring gear **211** with inner tooth is tightly connected. The input shaft **22** of differential **2** is rotatably mounted in one face of the body **21** of differential gear, inside the body **21** of differential at the end of input shaft **22** the sun wheel **221** with external teeth is attached. Between the rolling circumference of the sun wheel **221** and the rolling circumference of the ring gear **211** there are arranged satellite gears **23**, whose shafts **231** are rotatably mounted in carriers **24** of satellite gears. The carrier **24** of satellite gears is firmly connected with output shaft **25** of differential mounted rotatably in the body **21** of differential co-axially with input shaft **22**. The body **21** of differential is in a known not represented manner connected with the first input member **3**. This is generally formed of power drive of the device, which according to the Fig. 1a is realised e.g. by an asynchronous electromotor. The first input member **3** rotates the body **21** of the differential with an angular speed **ω₂₁**.

The input shaft **22** of differential **2** is connected to the second input member **4**, which is generally formed of regulation drive of a lower power. In all represented exemplary embodiments it is realised by a servomotor in the function of so called electronic cam with variable programmable controlled rotations with instantaneous angular speed **ω₄**.

To the output shaft **25** of differential **2** there is connected the operating member **5** of a not represented driven machine mechanism, whose angular speed **ω₅** is a superposition of angular speed **ω₂₁** of the body **21** of differential and angular speed **ω₄** of the second input member.

Embodiment according to the invention utilises wheels with spur gearing, which are of technological reasons more advantageous than the bevel gears. It is apparent that it would be possible to use also the friction differential. Selection of a suitable friction material for the contact circumferential surfaces of wheels, and/or securing of a continuous and stable pressure of jointly engaging friction surfaces may create a complication. It is also necessary to count on slippage of wheels which is a characteristic feature for friction gearing.

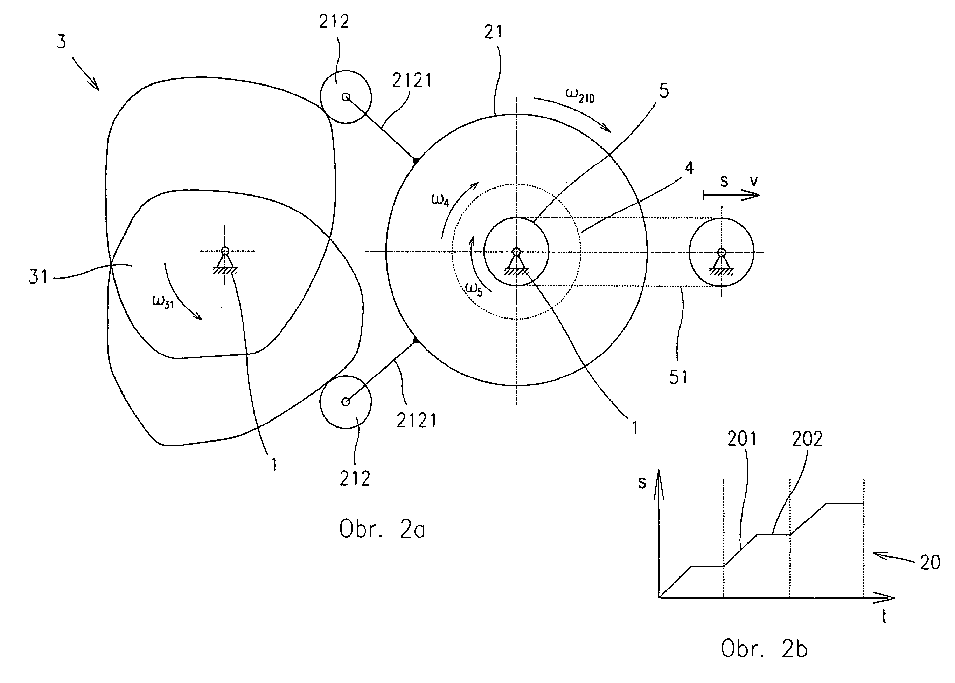

In exemplary embodiment of the device according to Fig. 2a the first input member **3** is realised by a double cam **31**, whose functional surface is coupled with a pair of pulleys **212** rotatably mounted on ends of radial arms **2121** firmly connected with circumference of the body **21** of differential **2**. Operating member **5** is here formed of in a step-wise straight moving means **51** driven by an output shaft **25** of differential **2** realised by a chain possibly by a belt or cable gearing.

Output of the device according to Fig. 2a is a defined stepping rotation motion of output operating member **5,** whose course is graphically represented in the Fig. 2b. The source of power for the operating member **5** is the first (power) input member **3**, whose double cam **31** driven by a motor with required torque rotates with a constant angular speed **ω₃₁**, through which it gets by means of pulleys **212** the body **21** of differential **2** into a periodic motion with an instantaneous angular speed **ω₂₂₁**. Motion of an electronic cam is brought directly or by means of a not represented constant gearing to the second (regulation) input member **4** with instantaneous angular speed **ω₄**. The motions of input members **3** and **4** are composed and the required periodic motion of the output operating member **5** with instantaneous angular speed **ω₅** represents their superposition. Periodic rotation motion of output, i.e. of the operating member **5,** can be transformed to periodic advance motion of the means **51** with speed "v", which in exemplary embodiment is the chain, possibly belt or cable gearing. Its course is represented in Fig. 2b by the curve **20,** where the rising section **201** of the curve **20** in one period, thus increasing shift "s" in time "t" of operating member **5,** is a result of acting of the first (power) input member **3.** Maintaining of constant position of the operating member **5** in next section **202** of the same period is a result of acting of the second (regulation) input member **4,** which at the reverse motion of the body **21** of differential **2** by rotating of the sun wheel **221** of differential maintains during this period a constant position of the carrier **24** of satellite gears **23,** and thus of the output shaft **25** of differential **2** and of operating member **5,** as it is obvious from Fig. 1a. At the same time the ratio of length of the sections **201, 202** in one period can be selected by means of electronic control of the second input member **4.**

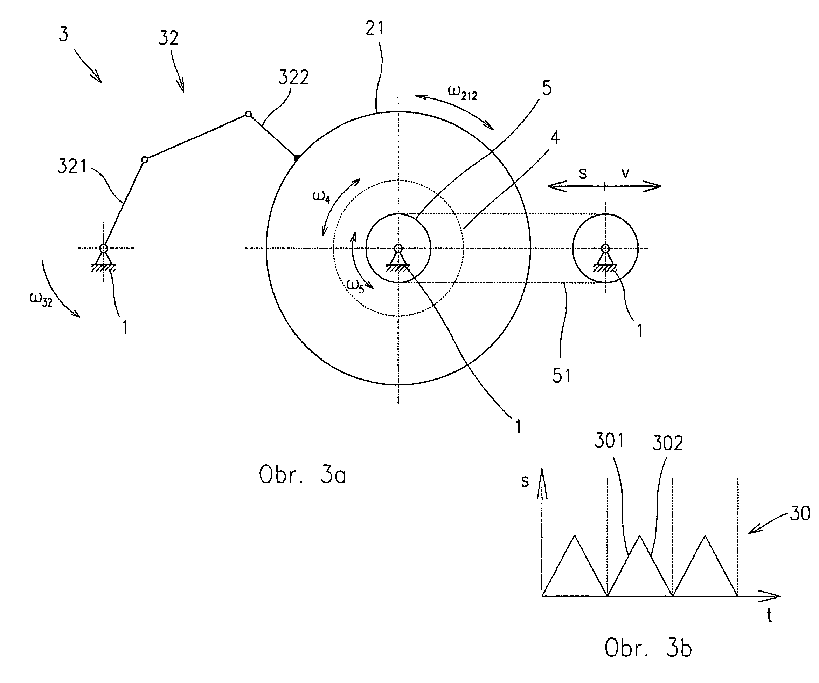

In exemplary embodiment of the device according to Fig. 3a the first input member **3** is realised by the four-joint mechanism **32** driven by a crank **321,** whose terminal element **322** is firmly connected with circumference of the body **21** of differential **2.** Here the operating member **5** is the straight reversibly moving means **51** driven by output shaft **25** of differential **2** realised by a chain, possibly belt or cable gearing.

Output of the device according to Fig. 3a is a defined periodic reversible rotation motion of output operating member **5,** whose course is graphically represented in Fig. 3b. The source of power for the operating member **5** is the first (power) input member **3,** formed of four-joint mechanism **32** driven by a motor with required torque, while its crank **321** rotates with a constant angular speed **ω₃₂.** Through this the body **21** of differential **2** gets in a periodic reversible motion with instantaneous angular speed **ω₂₁₂.** The course of stroke of electronic cam is brought directly or by means of a not represented constant gearing to the second (regulation) input member **4** with instantaneous angular speed **ω₄.** The motions of input members **3** and **4** are composed and the required periodic reversible motion of the output operating member **5** with instantaneous angular speed **ω₅** represents their superposition. Periodic reversible rotation motion of output, i.e. of the operating member **5,** can be transformed to periodic reversible advance motion of the means **51** with speed "v", which in exemplary embodiment is the chain, possibly belt or cable gearing. Its course is represented in Fig. 3b by the curve **30,** where the rising section **301** of the curve **30** in one period, thus increasing shift "s" in time "t" of operating member **5** can be a result of acting of the first (power) input member **3.** Decreasing section **302** of the curve **30** in another section of the same period is a result of acting of the second (regulation) input member **4,** which at the reverse motion of the body **21** of differential **2** by respective rotating of the sun wheel **221** of differential with an angular speed **w₄** causes a reverse motion of the carrier **24** of satellite gears **23,** and thus of the output shaft **25** of differential **2** and of operating member **5,** as it is obvious from Fig. 1 a. At the same time the ratio of length of the sections **301, 302** in one period can be selected by means of electronic control of the second input member **4.** The output motion of this character can be e.g. with advantage used for driving of the traversing device of wound yarn at an open-end spinning machine.

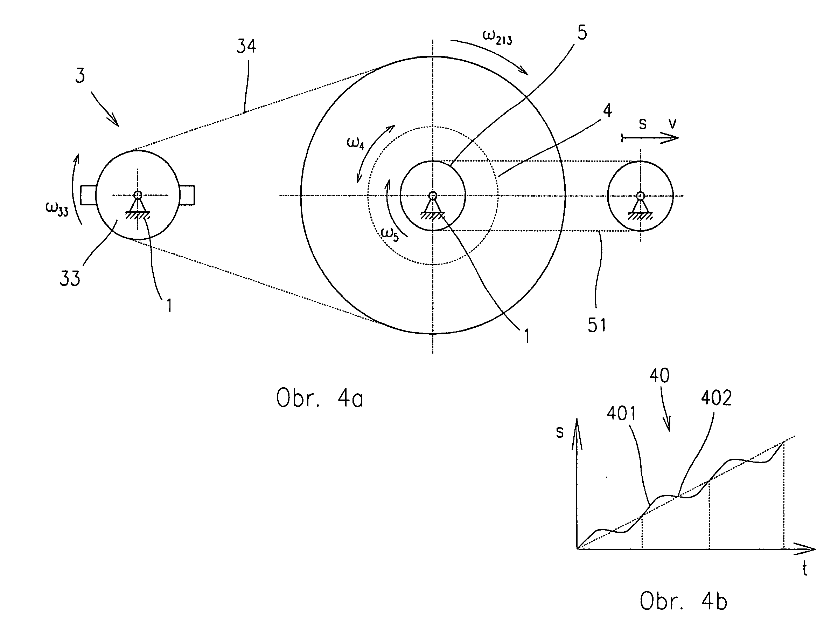

In exemplary embodiment of the device according to Fig. 4a the first input member **3** is realised by an asynchronous electromotor **33** with constant speed, which by means of the chain or belt gearing **34** is coupled with circumference of the body **21** of differential **2.** The operating member **5** is here formed of the means **51,** moving in a straight-line by a non-constant speed, driven from an output shaft **25** of differential **2** realised by a chain, possibly belt or cable gearing.

Output of the device according to Fig. 4a is a defined general, possibly a general periodic rotation motion of output operating member **5,** whose course is graphically represented in Fig. 4b. The source of power for the operating member **5** is the first (power) input member **3** realised by the electromotor **33** with required torque, which rotates with a constant angular speed **ω₃₃.** By means of a belt or chain gearing **34** it puts the body **21** of differential **2** in a rotation motion with a constant angular speed **ω₂₁₃.** The course of a stroke of electronic cam is brought directly or by means of not represented constant gearing to the second (regulation) input member **4** with instantaneous angular speed **ω₄.** The motions of input members **3** and **4** are composed and the required periodic motion of the output operating member **5** with instantaneous angular speed **ω₅** represents their superposition. General rotation motion of output, i.e. of the operating member **5,** can be transformed to general advance motion of the means **51** with speed "v", which in exemplary embodiment is the chain, possibly belt or cable gearing. Its course is represented in Fig. 4b by the curve **40.** The motion represented in Fig. 4b can be achieved e.g. so that the basic linear motion of operating member **5,** given by a straight line, is a result of acting of the first (power) input member **3.** On it there is superposed the wave fluctuation given only by acting of the second (regulation) input member **4.**

The output member **5** may also drive the not represented crank and by means of it other members of the driven machine mechanism.

If the value of transmitted power allows it, in exemplary embodiment according to Fig. 4 asynchronous electromotor possibly other power source of the first input member **3** can be superseded by a servomotor with function of electronic cam, thus fulfilling even more strict requirements as to accuracy in control of parameters of output operating member **5.**

Output of the device according to the invention can with advantage be used for any motion required by the function of the driven machine mechanism, for example for the drives with variable speed, when the mechanism is loaded with inertial forces due to slowing down and speeding up of motion of inertial masses. As an example can be shown the drive of mechanism of yarn traversing device upon winding the bobbins on spinning machines or the drive of beat-up mechanism on weaving machines. The device according to the invention enables in an optimum manner to compensate the inertia forces loading the device in dead centres of the traversing device and to supersede the complicated solutions utilising accumulation and a subsequent releasing of energy in the sphere of direction change in motion of traversing device in the dead centres.

### List of referential markings

- 1: frame
- 2: mechanical differential
- 20: curve
- 201: curve section
- 202: curve section
- 21: body (of differential)
- 211: ring gear
- 212: pulley
- 2121: radial arm
- 22: input shaft
- 221: sun wheel
- 23: satellite gear
- 231: shaft (of satellite gear)
- 24: carrier (of satellite gears)
- 25: output shaft
- 3: first (power) input member
- 30: curve
- 301: curve section
- 302: curve section
- 31: double cam
- 32: four-joint mechanism
- 321: crank (of four-joint mechanism)
- 322: terminal element (of four-joint mechanism)
- 33: gearing
- 34: gearing
- 4: second (regulation) input member
- 40: curve
- 401: curve section
- 402: curve section
- 5: output (operating) member
- 51: means (driven by output shaft )
- s: shift (generated by output member)
- t: time
- v: speed (caused by output member)
- ω₂₁: angular speed (of differential body)
- w₂₁₁: angular speed (of differential body)
- ω₂₁₂: angular speed (of differential body)
- ω₂₁₃: angular speed (of differential body)
- ω₃₁: angular speed (of double-cam)
- ω₃₂: angular speed (of electromotor)
- ω₄: angular speed (of second, regulation) input member
- ω₅: angular speed (of output member)

## Claims

1. Method for driving of members of machine mechanisms, especially at handling and production machines, at which the drive is taken from the output member (5) of a mechanical differential (2) and motion parameters of this drive are controlled by means of motion parameters of two input members (3, 4) of this mechanical differential (2) **characterised in that** at least one of the input members (4, 3) of this mechanical differential (2) is controlled by the stroke dependence of an electronic cam.

2. Method for driving of members of machine mechanisms according to the claim 1, **characterised in that** the size of stroke of electronic cam before the input member of mechanical differential (2) is transformed by means of a constant gearing.

3. Device for driving of members of machine mechanisms, especially at handling and production machines, comprising a mechanical differential (2) connected to two input members (3, 4) and to one output member (5) **characterised in that** at least one of the input members(4, 3) of this said mechanical differential (2) is controlled by the stroke dependence of an electronic cam.

4. Device for driving of members of machine mechanisms according to the claim 3, **characterised in that** the remaining input member (3, 4) comprises the cam mechanism with periodic driving motion.

5. Device for driving of members of machine mechanisms according to the claim 3, **characterised in that** the remaining input member (3, 4) comprises the four-joint mechanism (32) with periodic driving motion.

6. Device for driving of members of machine mechanisms according to the claim 3, **characterised in that** the remaining input member (3, 4) comprises rotation motor (33) with constant output speed.

7. Device for driving of members of machine mechanisms according to the claim 3, **characterised in that** the remaining input member (3, 4) comprises an electronic cam.

8. Device for driving of members of machine mechanisms according to any of the claims 3 to 7, **characterised in that** the mechanical differential (2) is formed of differential device of any structural arrangement ensuring the superposition of two input motions to one output motion.

## Patentansprüche

1. Verfahren zum Antrieb der Glieder der Maschinenmechanismen, insbesondere bei den Manipulations- und Produktionsmaschinen, bei denen der Antrieb dem Ausgangsglied (5) des mechanischen Ausgleichsgetriebes (2) entnommen wird und die Bewegungsparameter dieses Antriebs mit Hilfe der Bewegungsparameter von zwei Eingangsgliedern (3, 4) von diesem mechanischen Ausgleichsgetriebe (2) gesteuert werden, **dadurch gekennzeichnet, dass** mindestens ein Eingangsglied (4, 3) von diesem mechanischen Ausgleichsgetriebe (2) die Hubabhängigkeit des elektronischen Nockens befolgt.

2. Verfahren zum Antrieb der Glieder der Maschinenmechanismen nach dem Anspruch 1, **dadurch gekennzeichnet, dass** die Größe des Hubes des elektronischen Nockens vor dem Eingangsglied des mechanischen Ausgleichsgetriebes (2) mit Hilfe eines konstanten Getriebes umgewandelt wird.

3. Vorrichtung zum Antrieb der Glieder der Maschinenmechanismen, insbesondere bei den Manipulations- und Produktionsmaschinen, die ein mechanisches Ausgleichsgetriebe (2) aufweisen, das an zwei Eingangsglieder (3, 4) und ein Ausgangsglied (5) angeschlossen ist, **dadurch gekennzeichnet, dass** mindestens ein Eingangsglied (4, 3) von diesem mechanischen Ausgleichsgetriebe (2) die Hubabhängigkeit des elektronischen Nockens befolgt.

4. Vorrichtung zum Antrieb der Glieder der Maschinenmechanismen nach dem Anspruch 3, **dadurch gekennzeichnet, dass** das übrigbleibende Eingangsglied (3, 4) einen Nockenmechanismus mit einer periodischen Triebbewegung aufweist.

5. Vorrichtung zum Antrieb der Glieder der Maschinenmechanismen nach dem Anspruch 3, **dadurch gekennzeichnet, dass** das übrigbleibende Eingangsglied (3, 4) einen Viergelenkmechanismus (32) mit einer periodischen Triebbewegung aufweist.

6. Vorrichtung zum Antrieb der Glieder der Maschinenmechanismen nach dem Anspruch 3, **dadurch gekennzeichnet, dass** das übrigbleibende Eingangsglied (3, 4) einen Rotationsmotor (33) mit einer gleichbleibenden Ausgangsgeschwindigkeit aufweist.

7. Vorrichtung zum Antrieb der Glieder der Maschinenmechanismen nach dem Anspruch 3, **dadurch gekennzeichnet, dass** das übrigbleibende Eingangsglied (3, 4) einen elektronischen Nocken aufweist.

8. Vorrichtung zum Antrieb der Glieder der Maschinenmechanismen nach einem der Ansprüche 3 bis 7, **dadurch gekennzeichnet, dass** das mechanische Ausgleichsgetriebe (2) ein Ausgleichsgetriebe einer beliebigen Konstruktionsanordnung ist, die eine Superposition von zwei Eingangsbewegungen pro eine Ausgangsbewegung sicherstellt.

## Revendications

1. Procédé de la commande des membres des mécanismes de machine, surtout chez les machines de manipulation et de production, chez lesquelles la commande est retirée du membre de sortie (5) du différentiel mécanique (2) et les paramètres de cette commande sont manoeuvrés à l'aide des paramètres de mouvement des deux membres d'entrée (3, 4) de ce différentiel mécanique (2), **caractérisé en ce qu'** au moins un membre d'entrée (4, 3) de ce différentiel mécanique (2) est guidé par la dépendance de course de la came électronique.

2. Procédé de la commande des membres des mécanismes de machine suivant la revendication 1, **caractérisé en ce que** la grandeur de la course de la came électronique se transforme devant le membre d'entrée du différentiel mécanique (2) à l'aide de la transmission constante.

3. Procédé de la commande des membres des mécanismes de machine, surtout chez les machines de manipulation et de production, comprenant le différentiel mécanique (2) rattaché aux deux membres d'entrée (3, 4) et à un membre de sortie (5), **caractérisé en ce qu'** au moins un membre d'entrée (4, 3) de ce différentiel mécanique (2) est guidé par la dépendance de course de la came électronique.

4. Procédé de la commande des membres des mécanismes de machine suivant la revendication 3, **caractérisé en ce que** le membre d'entrée (3, 4) restant comprend le mécanisme de came avec le mouvement moteur périodique.

5. Procédé de la commande des membres des mécanismes de machine suivant la revendication 3, **caractérisé en ce que** le membre d'entrée (3, 4) restant comprend le mécanisme à quatre articulations (32) avec le mouvement moteur périodique.

6. Procédé de la commande des membres des mécanismes de machine suivant la revendication 3, **caractérisé en ce que** le membre d'entrée (3, 4) restant comprend le moteur rotatif avec la vitesse de sortie constante.

7. Procédé de la commande des membres des mécanismes de machine suivant la revendication 3, **caractérisé en ce que** le membre d'entrée (3, 4) restant comprend la came électronique.

8. Procédé de la commande des membres des mécanismes de machine suivant quelconque des revendications de 3 à 7, **caractérisé en ce que** le différentiel mécanique (2) est représenté par le différentiel dont l'arrangement de construction est facultatif, assurant la superposition des deux mouvements d'entrée à un mouvement de sortie.
